# EUROPEAN PATENT APPLICATION

(11) **EP 4 131 112 A1**
(43) Date of publication of application: **08.02.2023**
(21) Application number: 21774762.5
(22) Date of filing: 03.03.2021
(51) Int. Cl.: G06Q 20/36, G06Q 20/06, G06Q 20/38, H04L 9/32

(54) **ELECTRONIC WALLET AND METHOD FOR ATOMIC SWAPPING OF TWO DIFFERENT BLOCKCHAIN TOKENS BY USING ELECTRONIC WALLET**

(30) Priority: 24.03.2020 KR 20200035777
(71) Applicant: Sovereign Wallet Co., Ltd., Seoul 08208 (KR)
(72) Inventor: YUN, Seok Gu, Seoul 08208 (KR)
(74) Representative: Viering, Jentschura & Partner mbB Patent- und Rechtsanwälte
(86) International application number: PCT/KR2021/002613
(87) International publication number: WO 2021/194114

(57) **Abstract**

Provided is an operation method of an electronic wallet executed on a computing device. The operation method includes transmitting, by the electronic wallet, first token remittance information for remittance of a first token to a counterpart electronic wallet executed on a counterpart computing device and then receiving, by the electronic wallet, second token remittance information for remittance of a second token from the counterpart electronic wallet, the first token being used in a first blockchain network, and the second token being used in a second blockchain network; and publishing, by the electronic wallet, the first token remittance information on the first blockchain network.

## Description

### TECHNICAL FIELD

The present invention relates to an electronic wallet, and more particularly, to a method for atomic swapping of two different blockchain tokens and an electronic wallet for performing the method.

### BACKGROUND ART

A blockchain is ledger management technology based on distributed computing, in which pieces of small data, called blocks, of managed data are stored in a chain-type, link-based distributed data storage environment created based on a peer-to-peer (P2P) method so that no one can randomly modify the managed data and any one can read a changed result.

A blockchain (or a blockchain system) includes an unforgeable and irreversible database system and a blockchain address created by a user through public-key cryptography.

Transaction information recorded in a blockchain includes remittance information transmitted from one blockchain address to another blockchain address. To ensure the anonymity of a transaction, a blockchain records only the transaction history between blockchain addresses including numbers, and information about the owner of each of the blockchain addresses is not recorded.

### DESCRIPTION OF EMBODIMENTS

### TECHNICAL PROBLEM

Conventionally, when one of two users is in a first blockchain network and the other one is in a second blockchain network, the two users may not securely exchange their tokens with each other because they are not in the same blockchain.

Provided are a method of enabling two users to securely exchange their tokens with each other even when the two users are respectively in different blockchain networks and an electronic wallet for performing the method.

### SOLUTION TO PROBLEM

According to an aspect of the present disclosure, an operation method of an electronic wallet executed on a computing device includes transmitting, by the electronic wallet, first token remittance information for remittance of a first token to a counterpart electronic wallet executed on a counterpart computing device and then receiving, by the electronic wallet, second token remittance information for remittance of a second token from the counterpart electronic wallet, the first token being used in a first blockchain network, and the second token being used in a second blockchain network; and publishing, by the electronic wallet, the first token remittance information on the first blockchain network.

According to another aspect of the present disclosure, a method of providing a token swapping service by using a first electronic wallet installed in a first computing device and a second electronic wallet installed in a second computing device includes transmitting, by the first electronic wallet, first token remittance information for remittance of a first token to the second electronic wallet, the first token being used in a first blockchain network; transmitting, by the second electronic wallet, second token remittance information for remittance of a second token to the first electronic wallet, the second token being used in a second blockchain network; publishing, by the first electronic wallet, the first token remittance information on the first blockchain network after the first electronic wallet transmits the first token remittance information and receives the second token remittance information; and publishing, by the second electronic wallet, the second token remittance information on the second blockchain network after the second electronic wallet receives the first token remittance information and transmits the second token remittance information.

According to still another aspect of the present disclosure, a method of providing a token swapping service by using a first electronic wallet installed in a first computing device and a second electronic wallet installed in a second computing device includes transmitting, by the first electronic wallet, first token remittance information for remittance of a first token to the second electronic wallet, the first token being used in a first blockchain network; transmitting, by the second electronic wallet, second token remittance information for remittance of a second token to the first electronic wallet, the second token being used in a second blockchain network; after the first electronic wallet transmits the first token remittance information and receives the second token remittance information, publishing, by the first electronic wallet, the received second token remittance information on the second blockchain network; and after the second electronic wallet receives the first token remittance information and transmits the second token remittance information, publishing, by the second electronic wallet, the received first token remittance information on the first blockchain network.

According to a further aspect of the present disclosure, an electronic wallet includes a first token remittance electronic wallet transmitting first token remittance information for remittance of a first token to a counterpart electronic wallet executed on a counterpart computing device, the first token being used in a first blockchain network; and a second token receipt electronic wallet receiving second token remittance information for remittance of a second token from the counterpart electronic wallet, the second token being used in a second blockchain network, wherein the first token remittance electronic wallet publishes the first token remittance information on the first blockchain network.

### ADVANTAGEOUS EFFECTS OF DISCLOSURE

Conventionally, when one of two users is in a first blockchain network and the other one is in a second blockchain network, the two users may not securely exchange their tokens with each other because they are not in the same blockchain.

When an electronic wallet and a method for atomic swapping of two different blockchain tokens by using the electronic wallet, according to the present disclosure, are used, users may securely exchange their tokens with each other. In other words, the electronic wallet and the atomic swapping method may secure simultaneous exchange of tokens.

### BRIEF DESCRIPTION OF DRAWINGS

FIG. 1 is a block diagram of a blockchain system according to an embodiment of the present disclosure.
FIG. 2 illustrates an embodiment of a data flow so as to describe the operation of the blockchain system of FIG. 1.
FIG. 3 illustrates an embodiment of a data flow so as to describe the operation of the blockchain system of FIG. 1.
FIG. 4 is a diagram for describing the operation of an electronic wallet, according to an embodiment of the present disclosure.

### BEST MODE

An electronic wallet or an e-wallet, which is known as a digital wallet, a smart wallet, a crypto wallet, or a blockchain wallet, refers to an electronic device, an online service, or software, which allows an individual to conduct electronic transactions, e.g., token buying, token selling, token sending, token swapping, and/or token tracking. An atomic swap may refer to a guarantee of simultaneous exchange.

Electronic wallets 220 and 320 refer to applications respectively executed by processors 210 and 310 of respective computing devices 200 and 300, and the applications refer to application software, computer programs, software, or apps but are not limited thereto.

The first computing device 200 includes a first input device 201 (e.g., a keyboard, a touch pad, or a computer mouse), a first output device 203, such as a monitor or a display, a first processor 210, and a first transceiver 230. The second computing device 300 includes a second input device 301 (e.g., a keyboard, a touch pad, or a computer mouse), a second output device 303, such as a monitor or a display, a second processor 310, and a second transceiver 330.

Each of the computing devices 200 and 300 may refer to a desktop computer, a laptop computer, a mobile Internet device (MID), a smartphone, or an Internet of things (IoT) device but is not limited thereto. Each of the electronic wallets 220 and 320 is stored in a memory device of a corresponding one of the computing devices 200 and 300 and is executed by a corresponding one of the processors 210 and 310.

Here, an electronic wallet refers to an application performing a similar function to a banking app.

A first address of a first user refers to unique information for identifying the first user in a first blockchain network 400 and is similar to first bank account information of the first user. A second address of the first user refers to unique information for identifying the first user in a second blockchain network 500 and is similar to second bank account information of the first user.

A first address of a second user refers to unique information for identifying the second user in the first blockchain network 400 and is similar to first bank account information of the second user. A second address of the second user refers to unique information for identifying the second user in the second blockchain network 500 and is similar to second bank account information of the second user.

When the first user sends a token (or a blockchain token) to the second user through the first blockchain network 400, the first address of the first user corresponds to a sender address, and the first address of the second user corresponds to a receiver address. Contrarily, when the second user sends a token to the first user through the first blockchain network 400, the first address of the second user corresponds to a sender address, and the first address of the first user corresponds to a receiver address.

When the second user sends a token (or a blockchain token) to the first user through the second blockchain network 500, the second address of the second user corresponds to a sender address, and the second address of the first user corresponds to a receiver address. Contrarily, when the first user sends a token to the second user through the second blockchain network 500, the second address of the first user corresponds to a sender address, and the second address of the second user corresponds to a receiver address.

A token refers to electronic money, a digital currency, a cryptocurrency, a virtual currency, or a digital asset but is not limited thereto.

In the present disclosure, that one electronic wallet exchanges information with another electronic wallet means that a first computing device (or a first transceiver) executing the one electronic wallet exchanges the information with a second computing device (or a second transceiver) executing the other electronic wallet through a communication network. Here, the communication network includes a blockchain network (400 and/or 500) and/or a communication channel 600. The communication network includes a wired or wireless communication network.

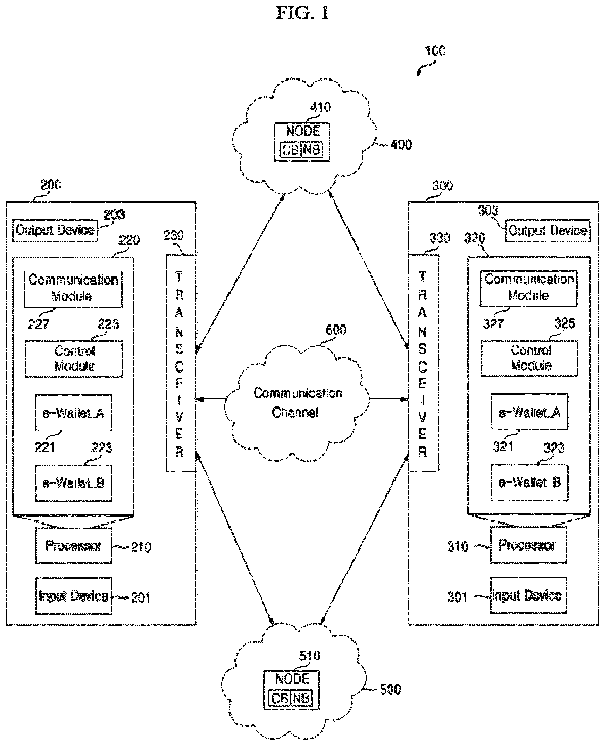

FIG. 1 is a block diagram of a blockchain system according to an embodiment of the present disclosure.

Referring to FIG. 1, a blockchain system 100 (which may be referred to as a blockchain remittance system or a distributed ledger processing system) includes a first computing device 200, a second computing device 300, a first blockchain network 400, a second blockchain network 500, and a communication channel 600. Each of blockchain networks 400 and 500 may refer to peer-to-peer (P2P) networks or different or heterogeneous blockchain networks.

Conventionally, when one of two users is in the first blockchain network 400 (e.g., a bitcoin network) and the other is in the second blockchain network 500 (e.g., an Ethereum network), the two users cannot securely exchange their tokens with each other because the two users are not in the same blockchain network.

However, when the electronic wallets 220 and 320 are respectively installed in the computing devices 200 and 300 and the communication channel 600 is between the computing devices 200 and 300, users may securely exchange their tokens with each other using the electronic wallets 220 and 320, respectively.

The processors 210 and 310 of the respective computing devices 200 and 300 respectively execute the electronic wallets 220 and 320. It is assumed that the structure and function of the first electronic wallet 220 are the same as those of the second electronic wallet 320.

The first electronic wallet 220 includes a first e-wallet_A 221, a first e-wallet_B 223, a first control module (or a first controller) 225, and a first communication module (or a first software transceiver) 227. Each of the elements (221, 223, 225, and 227) refers to a functional combination of software that may perform functions or operations described below.

The first e-wallet_A 221 performs remittance of tokens and receipt of tokens by using the first blockchain network 400. The first e-wallet_B 223 performs remittance of tokens and receipt of tokens by using the second blockchain network 500. The first control module 225 controls the first e-wallet_A 221, the first e-wallet_B 223, and the first communication module 227. The first communication module 227 communicates with the first blockchain network 400, the second blockchain network 500, and/or the communication channel 600 using the first transceiver 230. The first e-wallet_A 221 and the first e-wallet_B 223 may exchange information through the first control module 225.

The second electronic wallet 320 includes a second e-wallet_A 321, a second e-wallet_B 323, a second control module (or a second controller) 325, and a second communication module (or a second software transceiver) 327. Each of the elements (321, 323, 325, and 327) refers to a functional combination of software that may perform functions or operations described below.

The second e-wallet_A 321 performs remittance of tokens and receipt of tokens by using the first blockchain network 400. The second e-wallet_B 323 performs remittance of tokens and receipt of tokens by using the second blockchain network 500. The second control module 325 controls the second e-wallet_A 321, the second e-wallet_B 323, and the second communication module 327. The second communication module 327 communicates with the first blockchain network 400, the second blockchain network 500, and/or the communication channel 600 using the second transceiver 330. The second e-wallet_A 321 and the second e-wallet_B 323 may exchange information through the second control module 325.

It is assumed that the function and structure of the e-wallet_A 221 are the same as those of the e-wallet_A 321 and the function and structure of the e-wallet_B 223 are the same as those of the e-wallet_B 323.

The first blockchain network 400 includes at least one blockchain node 410. The blockchain node 410 generates and manages blocks CB and NB. The second blockchain network 500 includes at least one blockchain node 510. The blockchain node 510 generates and manages blocks CB and NB.

Although it is illustrated in FIGS. 1 to 3 that each of the blockchain networks 400 and 500 includes one blockchain node 410 or 510, this is just for convenience of description. Each of the blockchain nodes 410 and 510 collectively refers to a plurality of blockchain nodes.

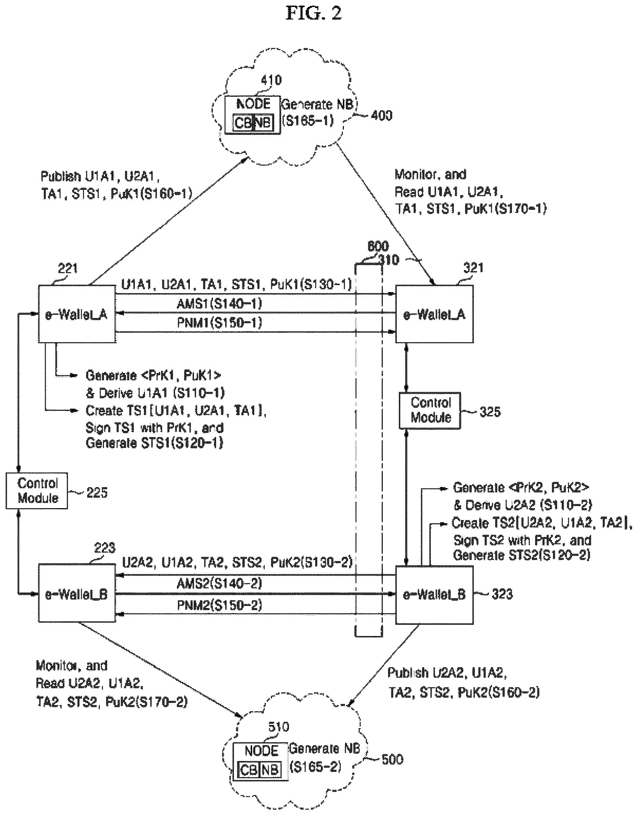

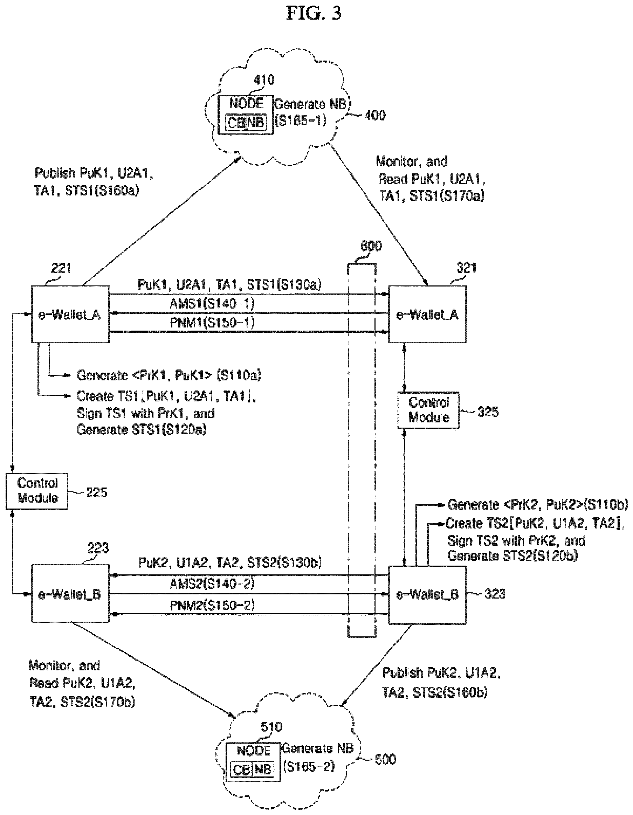

The first and second electronic wallets 220 and 320 may perform operations S130-1, S130-2, S140-1, S140-2, S150-1, and S150-2 in FIG. 2 and operations S130a, S130b, S140-1, S140-2, S150-1, and S150-2 in FIG. 3 through the communication channel 600.

FIG. 2 illustrates an embodiment of a data flow so as to describe the operation of a blockchain system of FIG. 1.

For convenience of description, it is assumed in FIG. 2 that the first user of the first computing device 200 sends a first token TA1 to the second user of the second computing device 300 through the first blockchain network 400 and the second user sends a second token TA2 to the first user through the second blockchain network 500. Accordingly, users may exchange tokens (e.g., TA1 and TA2), which are used in heterogeneous blockchain networks (or systems, e.g., the first and second blockchain networks 400 and 500), simultaneously, in parallel, or with an allowable time difference.

The first token (or a first blockchain token) TA1 refers to a token that is used (or defined) in the first blockchain network 400, and the second token (or a second blockchain token) TA2 refers to a token that is used (or defined) in the second blockchain network 500. Accordingly, the first token TA1 of the first user may be securely exchanged with the second token TA2 of the second user at a certain ratio (or a ratio that is agreed between the first and second users) through operations described with reference to FIGS. 2 and 3.

The first user is a sender of the first token TA1 and a receiver of the second token TA2. The second user is a sender of the second token TA2 and a receiver of the first token TA1.

According to embodiments of FIGS. 2 and 3, the first e-wallet_A 221 may be a first token remittance electronic wallet, the second e-wallet_A 321 may be a first token receipt electronic wallet 321, the second e-wallet_B 323 may be a second token remittance electronic wallet 323, and the first e-wallet_B 223 may be a second token receipt electronic wallet 223.

The first token remittance electronic wallet 221 included in the first electronic wallet 220 of the first user generates a pair <PrK1, PuK1 > of a first private key PrK1 and a first public key PuK1 and generates (or derives) a first address U1A1 of the first user from the first public key PuK1 (or by applying a hash function to the first public key PuK1) in operation S110-1.

When the first user inputs a first address U2A1 of the second user and the first token (or a first token amount) TA1 corresponding to a remittance amount into the first token remittance electronic wallet 221 by using the first input device 201 of the first computing device 200, the first token remittance electronic wallet 221 creates a first transaction TS1, which includes the first address U1A1 of the first user (i.e., the sender of the first token TA1), the first address U2A1 of the second user (i.e., the receiver of the first token TA1), and the first token TA1, and generates a digitally signed first transaction STS1 by digitally signing the first transaction TS1 with the first private key PrK1 in operation S120-1.

The second token remittance electronic wallet 323 included in the second electronic wallet 320 of the second user generates a pair <PrK2, PuK2> of a second private key PrK2 and a second public key PuK2 and generates (or derives) a second address U2A2 of the second user from the second public key PuK2 (or by applying a hash function to the second public key PuK2) in operation S110-2.

When the second user inputs a second address U1A2 of the first user and the second token (or a second token amount) TA2 corresponding to a remittance amount into the second token remittance electronic wallet 323 by using the second input device 301 of the second computing device 300, the second token remittance electronic wallet 323 creates a second transaction TS2, which includes the second address U2A2 of the second user (i.e., the sender of the second token TA2), the second address U1A2 of the first user (i.e., the receiver of the second token TA2), and the second token TA2, and generates a digitally signed second transaction STS2 by digitally signing the second transaction TS2 with the second private key PrK2 in operation S120-2.

First token remittance information including the first token TA1 is published on the first blockchain network 400 by the first user or the first electronic wallet 220 in the following cases. Here, the publishing refers to an operation of transmitting the first token TA1 to the first blockchain network 400 to allow a receiver (i.e., the second user) to receive the first token TA1.
1. The case of receiving a first agreement message AMS1 in operation S140-1 and receiving second token remittance information in operation S130-2 (i.e., after operations S130-2 and S140-1 are all performed).
2. The case of receiving the first agreement message AMS1 in operation S140-1 and transmitting a second agreement message AMS2 in operation S140-2 (i.e., after operations S140-1 and S140-2 are all performed).
3. The case of receiving the first agreement message AMS1 in operation S140-1, transmitting the second agreement message AMS2 in operation S140-2, and transmitting a first publish notification message PNM1 in operation S150-1 (i.e., after operations S140-1, S140-2, and S150-1 are all performed).
4. The case of receiving the first agreement message AMS1 in operation S140-1, transmitting the second agreement message AMS2 in operation S140-2, transmitting the first publish notification message PNM1 in operation S150-1, and receiving a second publish notification message PNM2 in operation S150-2 (i.e., after operations S140-1, S140-2, S150-1, and S150-2 are all performed).

Similarly, the second token remittance information including the second token TA2 is published on the second blockchain network 500 by the second user or the second electronic wallet 320 in the following cases. Here, the publishing refers to an operation of transmitting the second token TA2 to the second blockchain network 500 to allow a receiver (i.e., the first user) to receive the second token TA2.
1. The case of receiving the second agreement message AMS2 in operation S140-2 and receiving the first token remittance information in operation S130-1 (i.e., after operations S130-1 and S140-2 are all performed).
2. The case of receiving the second agreement message AMS2 in operation S140-2 and transmitting the first agreement message AMS1 in operation S140-1 (i.e., after operations S140-1 and S140-2 are all performed).
3. The case of receiving the second agreement message AMS2 in operation S140-2, transmitting the first agreement message AMS1 in operation S140-1, and transmitting the second publish notification message PNM2 in operation S150-2 (i.e., after operations S140-1, S140-2, and S150-2 are all performed).
4. The case of receiving the second agreement message AMS2 in operation S140-2, transmitting the first agreement message AMS1 in operation S140-1, transmitting the second publish notification message PNM2 in operation S150-2, and receiving the first publish notification message PNM1 in operation S150-1 (i.e., after operations S140-1, S140-2, S150-1, and S150-2 are all performed).

The first token remittance electronic wallet 221 generates and transmits the first token remittance information to the first token receipt electronic wallet 321 through elements (e.g., 227, 230, 600, 330, and 327) in operation S130-1. The first token remittance information includes a first user's first address U1A1, a second user's first address U2A1, a first token TA1, a digitally signed first transaction STS1, and a first public key PuK1.

The first token remittance information may be included in a blockchain ledger, which includes a plurality of blocks in a chain, and the first token TA1 may refer to the amount of blockchain-based electronic money, blockchain-based digital currency, blockchain-based cryptocurrency, or blockchain-based virtual currency.

The first token receipt electronic wallet 321 receives the first token remittance information through the communication channel 600 and generates and transmits a receipt notification for the first token remittance information to the second control module 325. The second control module 325 generates a first notification based on the receipt notification and transmits the first notification to the second token remittance electronic wallet 323.

The second token remittance electronic wallet 323 generates and transmits the second token remittance information to the second token receipt electronic wallet 223 through elements (e.g., 327, 330, 600, 230, and 227) in operation S130-2. The second token remittance information includes a second user's second address U2A2, a first user's second address U1A2, a second token TA2, a digitally signed second transaction STS2, and a second public key PuK2. According to embodiments, the second token remittance information may be generated in response to or regardless of the first notification.

The second token remittance information may be included in a blockchain ledger, which includes a plurality of blocks in a chain, and the second token TA2 may refer to the amount of blockchain-based electronic money, blockchain-based digital currency, blockchain-based cryptocurrency, or blockchain-based virtual currency.

The second token receipt electronic wallet 223 receives the second token remittance information and generates and transmits a receipt notification for the second token remittance information to the first control module 225. The first control module 225 generates a second notification based on the receipt notification and transmits the second notification to the first token remittance electronic wallet 221.

In addition, the second token receipt electronic wallet 223 receives the second token remittance information, generates the second agreement message AMS2, and transmits the second agreement message AMS2 to the second token remittance electronic wallet 323 through elements (e.g., 227, 230, 600, 330, and 327) in operation S140-2. The second agreement message AMS2 indicates that the second token remittance information has been received or agreed to.

The second token receipt electronic wallet 223 generates a transmission notification for the second agreement message AMS2 and transmits the transmission notification to the first control module 225. The first control module 225 generates a fourth notification based on the transmission notification and transmits the fourth notification to the first token remittance electronic wallet 221.

The first token receipt electronic wallet 321 that has received the first token remittance information generates the first agreement message AMS1 and transmits the first agreement message AMS1 to the first token remittance electronic wallet 221 through elements (e.g., 327, 330, 600, 230, and 227) in operation S140-1. The first agreement message AMS1 indicates that the first token remittance information has been received or agreed to.

The first token receipt electronic wallet 321 generates and transmits a transmission notification for the first agreement message AMS1 to the second control module 325. The second control module 325 generates a third notification based on the transmission notification and transmits the third notification to the second token remittance electronic wallet 323.

After operation S140-2 is performed, for example, when the fourth notification with respect to the transmission notification for the second agreement message AMS2 is received, the first token remittance electronic wallet 221 generates and transmits the first publish notification message PNM1 to the first token receipt electronic wallet 321 through elements (e.g., 227, 230, 600, 330, and 327) in operation S150-1. The first publish notification message PNM1 notifies that the first token remittance information has been or will be published on the first blockchain network 400.

The first token receipt electronic wallet 321 receives the first publish notification message PNM1 and generates and transmits a receipt notification for the first publish notification message PNM1 to the second control module 325. The second control module 325 generates a fifth notification based on the receipt notification and transmits the fifth notification to the second token remittance electronic wallet 323.

After operation S140-1 is performed, for example, when the third notification with respect to the transmission notification for the first agreement message AMS1 is received, the second token remittance electronic wallet 323 generates and transmits the second publish notification message PNM2 to the second token receipt electronic wallet 223 through elements (e.g., 327, 330, 600, 230, and 227) in operation S150-2. The second publish notification message PNM2 notifies that the second token remittance information has been or will be published on the second blockchain network 500.

The second token receipt electronic wallet 223 receives the second publish notification message PNM2 and generates and transmits a receipt notification for the second publish notification message PNM2 to the first control module 225. The first control module 225 generates a sixth notification based on the receipt notification and transmits the sixth notification to the first token remittance electronic wallet 221.

When any one of the cases (or embodiments), in which the first token remittance information is published, as described above, is satisfied, the first electronic wallet 220, e.g., the first token remittance electronic wallet 221, publishes the first token remittance information on (or transmits the first token remittance information to) the first blockchain network 400 through elements (e.g., 227 and 230) in operation S160-1 to publish the first token TA1 on (or transmit the first token TA1 to) the first blockchain network 400.

The first token remittance information is published in the following cases.
1. The case of receiving the first agreement message AMS1 and receiving the second notification related to the receipt of the second token remittance information (i.e., after operations S130-2 and S140-1 are all performed).
2. The case of receiving the first agreement message AMS1 and receiving the fourth notification related to the transmission of the second agreement message AMS2 (i.e., after operations S140-1 and S140-2 are all performed).
3. The case of receiving the first agreement message AMS1, receiving the fourth notification related to the transmission of the second agreement message AMS2, and transmitting the first publish notification message PNM1 (i.e., after operations S140-1, S140-2, and S150-1 are all performed).
4. The case of receiving the first agreement message AMS1, receiving the fourth notification related to the transmission of the second agreement message AMS2, transmitting the first publish notification message PNM1, and receiving the sixth notification related to the receipt of the second publish notification message PNM2 (i.e., after operations S140-1, S140-2, S150-1, and S150-2 are all performed).

The first blockchain network 400 is a technical infrastructure that provides a blockchain ledger and smart contract (or chaincode) services to applications (e.g., 221 and 321). The first blockchain network 400 may process a blockchain ledger or a distributed ledger.

The first blockchain network 400 includes at least one blockchain node 410. The blockchain node 410 receives (or picks up) the first token remittance information from the first token remittance electronic wallet 221, generates a next block (or a new block) NB next to a current block CB, and stores the first token remittance information in the next block NB in operation S165-1.

For example, the first token remittance electronic wallet 221 or the blockchain node 410 may generate and store the first token remittance information (or a transaction including the first token remittance information) in the first blockchain network 400 or the next block NB of the blockchain node 410.

When the first token remittance information is stored in the next block NB of the blockchain node 410, the first token remittance electronic wallet 221, which monitors the storage of the first token remittance information, updates the first user's token balance related to the first token TA1.

The first token receipt electronic wallet 321 monitors the update of the next block NB of the blockchain node 410 included in the first blockchain network 400 or the addition of the first token remittance information to the next block NB and reads the first token remittance information, which is transmitted to the second user's first address U2A1, according to a monitoring result in operation S170-1.

When the first user, i.e., the sender of the first token TA1, does not publish the first token remittance information on the first blockchain network 400, the second user, i.e., the receiver of the first token TA1, may personally publish the first token remittance information on the first blockchain network 400 by using the first token receipt electronic wallet 321 because the first token remittance information is publishable.

According to embodiments, the first token receipt electronic wallet 321 may display all or part of the first token remittance information on the second output device 303 of the second computing device 300.

Because the first token receipt electronic wallet 321 may verify the digitally signed first transaction STS1 by using the second user's public key (e.g., a public key related to the first blockchain network 400), the first user's first address U1A1, the second user's first address U2A1, and/or the first token TA1, which are included in the digitally signed first transaction STS1, are verified.

The first token receipt electronic wallet 321 may update the second user's token balance related to the first token TA1, based on the first token TA1.

When any one of the cases, in which the second token remittance information is published, as described above, is satisfied, the second electronic wallet 320 publishes the second token remittance information on (or transmits the second token remittance information to) the second blockchain network 500 through elements (e.g., 327 and 330) in operation S160-2 to publish the second token TA2 on (or transmit the second token TA2 to) the second blockchain network 500.

The second token remittance information is published in the following cases.
1. The case of receiving the second agreement message AMS2 and receiving the first notification related to the receipt of the first token remittance information (i.e., after operations S130-1 and S140-2 are all performed).
2. The case of receiving the second agreement message AMS2 and receiving the third notification related to the transmission of the first agreement message AMS1 (i.e., after operations S140-1 and S140-2 are all performed).
3. The case of receiving the second agreement message AMS2, receiving the third notification related to the transmission of the first agreement message AMS1, and transmitting the second publish notification message PNM2 (i.e., after operations S140-1, S140-2, and S150-2 are all performed).
4. The case of receiving the second agreement message AMS2, receiving the third notification related to the transmission of the first agreement message AMS1, transmitting the second publish notification message PNM2, and receiving the fifth notification related to the receipt of the first publish notification message PNM1 (i.e., after operations S140-1, S140-2, S150-1, and S150-2 are all performed).

The second blockchain network 500 is a technical infrastructure that provides a blockchain ledger and smart contract (or chaincode) services to applications (e.g., the second token receipt electronic wallet 223 and the second token remittance electronic wallet 323). The second blockchain network 500 may process a blockchain ledger or a distributed ledger.

The second blockchain network 500 includes at least one blockchain node 510. The blockchain node 510 receives (or picks up) the second token remittance information from the second token remittance electronic wallet 323, generates a next block (or a new block) NB next to a current block CB, and stores the second token remittance information in the next block NB in operation S165-2.

For example, the second token remittance electronic wallet 323 or the blockchain node 510 may generate and store the second token remittance information (or a transaction including the second token remittance information) in the second blockchain network 500 or the next block NB of the blockchain node 510.

When the second token remittance information is stored in the next block NB of the blockchain node 510, the second token remittance electronic wallet 323, which monitors the storage of the second token remittance information, updates the second user's token balance related to the second token TA2.

The second token receipt electronic wallet 223 monitors the update of the next block NB of the blockchain node 510 included in the second blockchain network 500 or the addition of the second token remittance information to the next block NB and reads the second token remittance information, which is related to the second token TA2 transmitted to the first user's second address U1A2, according to a monitoring result in operation S170-2.

When the second user, i.e., the sender of the second token TA2, does not publish the second token remittance information on the second blockchain network 500, the first user, i.e., the receiver of the second token TA2, may personally publish the second token remittance information on the second blockchain network 500 by using the second token receipt electronic wallet 223 because the second token remittance information is publishable.

According to embodiments, the second token receipt electronic wallet 223 may display all or part of the second token remittance information on the first output device 203 of the first computing device 200.

Because the second token receipt electronic wallet 223 may verify the digitally signed second transaction STS2 by using the first user's public key (e.g., a public key related to the second blockchain network 500), the second user's second address U2A2, the first user's second address U1A2, and/or the second token TA2, which are included in the digitally signed second transaction STS2, are verified.

The second token receipt electronic wallet 223 may update the first user's token balance related to the second token TA2, based on the second token TA2.

FIG. 3 illustrates an embodiment of a data flow so as to describe the operation of a blockchain system of FIG. 1.

For convenience of description, it is assumed in FIG. 3 that the first user sends the first token TA1 to the second user through the first blockchain network 400 and the second user sends the second token TA2 to the first user through the second blockchain network 500.

The first token remittance electronic wallet 221 included in the first electronic wallet 220 of the first user generates a pair <PrK1, PuK1 > of a first private key PrK1 and a first public key PuK1 in operation S110a.

When the first user inputs the second user's first address U2A1 and the first token (or the first token amount) TA1 corresponding to a remittance amount into the first token remittance electronic wallet 221 by using the first input device 201 of the first computing device 200, the first token remittance electronic wallet 221 creates the first transaction TS1, which includes the first public key PuK1, the first address U2A1 of the second user (i.e., the receiver of the first token TA1), and the first token TA1, and generates the digitally signed first transaction STS1 by digitally signing the first transaction TS1 with the first private key PrK1 in operation S120a.

The second token remittance electronic wallet 323 included in the second electronic wallet 320 of the second user generates a pair <PrK2, PuK2> of a second private key PrK2 and a second public key PuK2 in operation S110b.

When the second user inputs the first user's second address U1A2 and the second token (or the second token amount) TA2 corresponding to a remittance amount into the second token remittance electronic wallet 323 by using the second input device 301 of the second computing device 300, the second token remittance electronic wallet 323 creates the second transaction TS2, which includes the second public key PuK2, the second address U1A2 of the first user (i.e., the receiver of the second token TA2), and the second token TA2, and generates the digitally signed second transaction STS2 by digitally signing the second transaction TS2 with the second private key PrK2 in operation S120b.

As described above, first token remittance information including the first token TA1 is published on the first blockchain network 400 by the first user or the first electronic wallet 220 in the following cases.
1. The case of receiving the first agreement message AMS1 in operation S140-1 and receiving second token remittance information in operation S130b (i.e., after operations S130b and S140-1 are all performed).
2. The case of receiving the first agreement message AMS 1 in operation S140-1 and transmitting the second agreement message AMS2 in operation S140-2 (i.e., after operations S140-1 and S140-2 are all performed).
3. The case of receiving the first agreement message AMS 1 in operation S140-1, transmitting the second agreement message AMS2 in operation S140-2, and transmitting the first publish notification message PNM1 in operation S150-1 (i.e., after operations S140-1, S140-2, and S150-1 are all performed).
4. The case of receiving the first agreement message AMS 1 in operation S140-1, transmitting the second agreement message AMS2 in operation S140-2, transmitting the first publish notification message PNM1 in operation S150-1, and receiving the second publish notification message PNM2 in operation S150-2 (i.e., after operations S140-1, S140-2, S150-1, and S150-2 are all performed).

Similarly, the second token remittance information including the second token TA2 is published on the second blockchain network 500 by the second user or the second electronic wallet 320 in the following cases.
1. The case of receiving the second agreement message AMS2 in operation S140-2 and receiving the first token remittance information in operation S130a (i.e., after operations S130a and S140-2 are all performed).
2. The case of receiving the second agreement message AMS2 in operation S140-2 and transmitting the first agreement message AMS1 in operation S140-1 (i.e., after operations S140-1 and S140-2 are all performed).
3. The case of receiving the second agreement message AMS2 in operation S140-2, transmitting the first agreement message AMS1 in operation S140-1, and transmitting the second publish notification message PNM2 in operation S150-2 (i.e., after operations S140-1, S140-2, and S150-2 are all performed).
4. The case of receiving the second agreement message AMS2 in operation S140-2, transmitting the first agreement message AMS1 in operation S140-1, transmitting the second publish notification message PNM2 in operation S150-2, and receiving the first publish notification message PNM1 in operation S150-1 (i.e., after operations S140-1, S140-2, S150-1, and S150-2 are all performed).

The first token remittance electronic wallet 221 generates and transmits the first token remittance information to the first token receipt electronic wallet 321 through elements (e.g., 227, 230, 600, 330, and 327) in operation S130a. The first token remittance information includes the first public key PuK1, the second user's first address U2A1, the first token TA1, and the digitally signed first transaction STS1. The first public key PuK1 is used instead of the first user's first address U1A1.

The first token receipt electronic wallet 321 receives the first token remittance information through the communication channel 600 and generates and transmits a receipt notification for the first token remittance information to the second control module 325. The second control module 325 generates a first notification based on the receipt notification and transmits the first notification to the second token remittance electronic wallet 323.

The second token remittance electronic wallet 323 generates and transmits the second token remittance information to the second token receipt electronic wallet 223 through elements (e.g., 327, 330, 600, 230, and 227) in operation S130b. The second token remittance information includes the second public key PuK2, the first user's second address U1A2, the second token TA2, and the digitally signed second transaction STS2. The second public key PuK2 is used instead of the second user's second address U2A2. According to embodiments, the second token remittance information may be generated in response to or regardless of the first notification.

The second token receipt electronic wallet 223 receives the second token remittance information and generates and transmits a receipt notification for the second token remittance information to the first control module 225. The first control module 225 generates a second notification based on the receipt notification and transmits the second notification to the first token remittance electronic wallet 221.

In addition, the second token receipt electronic wallet 223 receives the second token remittance information, generates the second agreement message AMS2, and transmits the second agreement message AMS2 to the second token remittance electronic wallet 323 through elements (e.g., 227, 230, 600, 330, and 327) in operation S140-2. The second agreement message AMS2 indicates that the second token remittance information has been received or agreed to.

The second token receipt electronic wallet 223 generates a transmission notification for the second agreement message AMS2 and transmits the transmission notification to the first control module 225. The first control module 225 generates a fourth notification based on the transmission notification and transmits the fourth notification to the first token remittance electronic wallet 221.

The first token receipt electronic wallet 321 that has received the first token remittance information generates the first agreement message AMS1 and transmits the first agreement message AMS1 to the first token remittance electronic wallet 221 through elements (e.g., 327, 330, 600, 230, and 227) in operation S140-1. The first agreement message AMS1 indicates that the first token remittance information has been received or agreed to.

The first token receipt electronic wallet 321 generates and transmits a transmission notification for the first agreement message AMS1 to the second control module 325. The second control module 325 generates a third notification based on the transmission notification and transmits the third notification to the second token remittance electronic wallet 323.

After operation S140-2 is performed, for example, when the fourth notification with respect to the transmission notification for the second agreement message AMS2 is received, the first token remittance electronic wallet 221 generates and transmits the first publish notification message PNM1 to the first token receipt electronic wallet 321 through elements (e.g., 227, 230, 600, 330, and 327) in operation S150-1. The first publish notification message PNM1 notifies that the first token remittance information has been or will be published on the first blockchain network 400.

The first token receipt electronic wallet 321 receives the first publish notification message PNM1 and generates and transmits a receipt notification for the first publish notification message PNM1 to the second control module 325. The second control module 325 generates a fifth notification based on the receipt notification and transmits the fifth notification to the second token remittance electronic wallet 323.

After operation S140-1 is performed, for example, when the third notification with respect to the transmission notification for the first agreement message AMS1 is received, the second token remittance electronic wallet 323 generates and transmits the second publish notification message PNM2 to the second token receipt electronic wallet 223 through elements (e.g., 327, 330, 600, 230, and 227) in operation S150-2. The second publish notification message PNM2 notifies that the second token remittance information has been or will be published on the second blockchain network 500.

The second token receipt electronic wallet 223 receives the second publish notification message PNM2 and generates and transmits a receipt notification for the second publish notification message PNM2 to the first control module 225. The first control module 225 generates a sixth notification based on the receipt notification and transmits the sixth notification to the first token remittance electronic wallet 221.

When any one of the cases (or embodiments), in which the first token remittance information is published, as described above, is satisfied, the first electronic wallet 220, e.g., the first token remittance electronic wallet 221, publishes the first token remittance information on (or transmits the first token remittance information to) the first blockchain network 400 through elements (e.g., 227 and 230) in operation S160a to publish the first token TA1 on (or transmit the first token TA1 to) the first blockchain network 400.

The first token remittance information is published in the following cases.
1. The case of receiving the first agreement message AMS1 and receiving the second notification related to the receipt of the second token remittance information (i.e., after operations S130b and S140-1 are all performed).
2. The case of receiving the first agreement message AMS1 and receiving the fourth notification related to the transmission of the second agreement message AMS2 (i.e., after operations S140-1 and S140-2 are all performed).
3. The case of receiving the first agreement message AMS1, receiving the fourth notification related to the transmission of the second agreement message AMS2, and transmitting the first publish notification message PNM1 (i.e., after operations S140-1, S140-2, and S150-1 are all performed).
4. The case of receiving the first agreement message AMS1, receiving the fourth notification related to the transmission of the second agreement message AMS2, transmitting the first publish notification message PNM1, and receiving the sixth notification related to the receipt of the second publish notification message PNM2 (i.e., after operations S140-1, S140-2, S150-1, and S150-2 are all performed).

The first blockchain network 400 includes at least one blockchain node 410. The blockchain node 410 receives (or picks up) the first token remittance information from the first token remittance electronic wallet 221, generates the next block (or the new block) NB next to the current block CB, and stores the first token remittance information in the next block NB in operation S165-1.

When the first token remittance information is stored in the next block NB of the blockchain node 410, the first token remittance electronic wallet 221, which monitors the storage of the first token remittance information, updates the first user's token balance related to the first token TA1.

The first token receipt electronic wallet 321 monitors the update of the next block NB of the blockchain node 410 included in the first blockchain network 400 or the addition of the first token remittance information to the next block NB and reads the first token remittance information, which is transmitted to the second user's first address U2A1, according to a monitoring result in operation S170a.

When the first user, i.e., the sender of the first token TA1, does not publish the first token remittance information on the first blockchain network 400, the second user, i.e., the receiver of the first token TA1, may personally publish the first token remittance information on the first blockchain network 400 by using the first token receipt electronic wallet 321 because the first token remittance information is publishable.

According to embodiments, the first token receipt electronic wallet 321 may display all or part of the first token remittance information on the second output device 303 of the second computing device 300.

The first token receipt electronic wallet 321 may update the second user's token balance related to the first token TA1, based on the first token TA1.

When any one of the cases, in which the second token remittance information is published, as described above, is satisfied, the second electronic wallet 320 publishes the second token remittance information on (or transmits the second token remittance information to) the second blockchain network 500 through elements (e.g., 327 and 330) in operation S160b to publish the second token TA2 on (or transmit the second token TA2 to) the second blockchain network 500.

The second token remittance information is published in the following cases.
1. The case of receiving the second agreement message AMS2 and receiving the first notification related to the receipt of the first token remittance information (i.e., after operations S130a and S140-2 are all performed).
2. The case of receiving the second agreement message AMS2 and receiving the third notification related to the transmission of the first agreement message AMS1 (i.e., after operations S140-1 and S140-2 are all performed).
3. The case of receiving the second agreement message AMS2, receiving the third notification related to the transmission of the first agreement message AMS1, and transmitting the second publish notification message PNM2 (i.e., after operations S140-1, S140-2, and S150-2 are all performed).
4. The case of receiving the second agreement message AMS2, receiving the third notification related to the transmission of the first agreement message AMS1, transmitting the second publish notification message PNM2, and receiving the fifth notification related to the receipt of the first publish notification message PNM1 (i.e., after operations S140-1, S140-2, S150-1, and S150-2 are all performed).

The second blockchain network 500 includes at least one blockchain node 510. The blockchain node 510 receives (or picks up) the second token remittance information from the second token remittance electronic wallet 323, generates the next block (or the new block) NB next to the current block CB, and stores the second token remittance information in the next block NB in operation S165-2.

When the second token remittance information is stored in the next block NB of the blockchain node 510, the second token remittance electronic wallet 323, which monitors the storage of the second token remittance information, updates the second user's token balance related to the second token TA2.

The second token receipt electronic wallet 223 monitors the update of the next block NB of the blockchain node 510 included in the second blockchain network 500 or the addition of the second token remittance information to the next block NB and reads the second token remittance information, which is related to the second token TA2 transmitted to the first user's second address U1A2, according to a monitoring result in operation S170b.

When the second user, i.e., the sender of the second token TA2, does not publish the second token remittance information on the second blockchain network 500, the first user, i.e., the receiver of the second token TA2, may personally publish the second token remittance information on the second blockchain network 500 by using the second token receipt electronic wallet 223 because the second token remittance information is publishable.

According to embodiments, the second token receipt electronic wallet 223 may display all or part of the second token remittance information on the first output device 203 of the first computing device 200.

The second token receipt electronic wallet 223 may update the first user's token balance related to the second token TA2, based on the second token TA2.

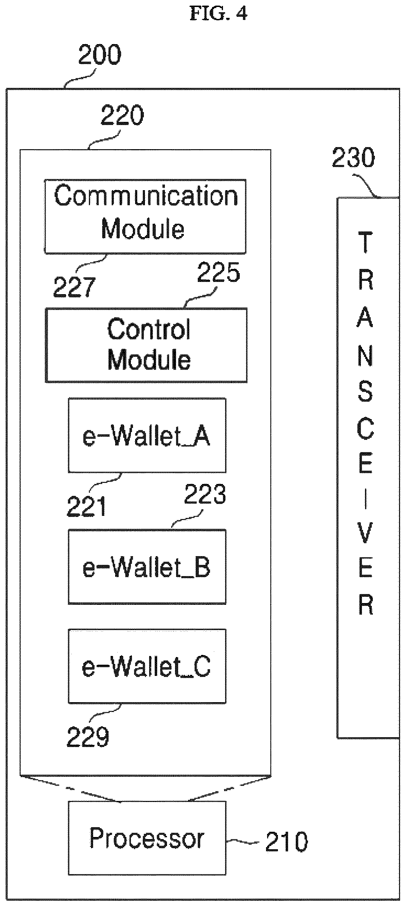

FIG. 4 is a diagram for describing the operation of an electronic wallet, according to an embodiment of the present disclosure.

Referring to FIG. 4, a new e-wallet_C 229 is installed or downloaded on the first computing device 200. The control module 225 adds (or merges) the new e-wallet_C 229 to the electronic wallet 220, controls a plurality of e-wallets 221, 223, and/or 229 to communicate with the communication module 227, and controls the e-wallets 221, 223, and 229 to exchange a receipt notification for token information, a transmission notification for an agreement message, and/or a transmission notification for a publish notification message with each of existing electronic wallets 221 and 223.

For example, a user of the first computing device 200 may send a token using the new e-wallet_C 229 and a third blockchain network. The first user of the first computing device 200 may send a token (e.g., a token usable in the first blockchain network 400) to the second user of the second computing device 300 through the first blockchain network 400, and the second user may send a token (e.g., a token usable in the third blockchain network) to the first user through the third blockchain network.

While this present disclosure has been described with reference to embodiments shown in the drawings, it will be understood by those of ordinary skill in the art that various changes in form and details may be made therein. Therefore, the scope of the present disclosure will be defined by the technical ideas of the appended claims.

### INDUSTRIAL APPLICABILITY

The present invention may be used for an electronic wallet, an operation method of the electronic wallet, and a method of providing a token swapping service.

## Claims

1. An operation method of an electronic wallet executed on a computing device, the operation method comprising:
transmitting, by the electronic wallet, first token remittance information for remittance of a first token to a counterpart electronic wallet executed on a counterpart computing device and then receiving, by the electronic wallet, second token remittance information for remittance of a second token from the counterpart electronic wallet, the first token being used in a first blockchain network, and the second token being used in a second blockchain network; and
publishing, by the electronic wallet, the first token remittance information on the first blockchain network.

2. The operation method of claim 1, further comprising publishing, by the electronic wallet, the second token remittance information on the second blockchain network.

3. The operation method of claim 2, wherein the publishing of the second token remittance information on the second blockchain network includes publishing the second token remittance information on the second blockchain network when the electronic wallet does not receive a publish notification message from the counterpart electronic wallet,
wherein the publish notification message indicating that the second token remittance information has been published on the second blockchain network.

4. The operation method of claim 1, wherein the publishing of the first token remittance information on the first blockchain network includes publishing the first token remittance information on the first blockchain network after the electronic wallet receives a first agreement message related to the first token remittance information from the counterpart electronic wallet and receives the second token remittance information from the counterpart electronic wallet.

5. The operation method of claim 1, wherein the publishing of the first token remittance information on the first blockchain network includes publishing the first token remittance information on the first blockchain network after the electronic wallet receives a first agreement message related to the first token remittance information from the counterpart electronic wallet and transmits a second agreement message related to the second token remittance information to the counterpart electronic wallet.

6. The operation method of claim 1, wherein the publishing of the first token remittance information on the first blockchain network includes publishing the first token remittance information on the first blockchain network after the electronic wallet receives a first agreement message related to the first token remittance information from the counterpart electronic wallet, transmits a second agreement message related to the second token remittance information to the counterpart electronic wallet, and transmits a publish notification message to the counterpart electronic wallet,
Wherein the publish notification message indicating that the first token remittance information is to be published on the first blockchain network.

7. The operation method of claim 1, wherein the publishing of the first token remittance information on the first blockchain network includes publishing the first token remittance information on the first blockchain network after the electronic wallet receives a first agreement message related to the first token remittance information from the counterpart electronic wallet, transmits a second agreement message related to the second token remittance information to the counterpart electronic wallet, transmits a first publish notification message to the counterpart electronic wallet, and receives a second publish notification message from the counterpart electronic wallet,
wherin the first publish notification message indicating that the first token remittance information is to be published on the first blockchain network, and
wherein the second publish notification message indicating that the second token remittance information is to be published on the second blockchain network.

8. The operation method of claim 1, wherein the electronic wallet includes:
a first token remittance electronic wallet transmitting the first token remittance information to the counterpart electronic wallet and publishing the first token remittance information on the first blockchain network; and
a second token receipt electronic wallet receiving the second token remittance information from the counterpart electronic wallet.

9. A method of providing a token swapping service by using a first electronic wallet installed in a first computing device and a second electronic wallet installed in a second computing device, the method comprising:
transmitting, by the first electronic wallet, first token remittance information for remittance of a first token to the second electronic wallet, the first token being used in a first blockchain network;
transmitting, by the second electronic wallet, second token remittance information for remittance of a second token to the first electronic wallet, the second token being used in a second blockchain network;
publishing, by the first electronic wallet, the first token remittance information on the first blockchain network after the first electronic wallet transmits the first token remittance information and receives the second token remittance information; and
publishing, by the second electronic wallet, the second token remittance information on the second blockchain network after the second electronic wallet receives the first token remittance information and transmits the second token remittance information.

10. The method of claim 9, wherein the publishing of the first token remittance information on the first blockchain network includes publishing the first token remittance information on the first blockchain network after the first electronic wallet receives a first agreement message related to the first token remittance information from the second electronic wallet and receives the second token remittance information from the second electronic wallet.

11. The method of claim 9, wherein the publishing of the first token remittance information on the first blockchain network includes publishing the first token remittance information on the first blockchain network after the first electronic wallet receives a first agreement message related to the first token remittance information from the second electronic wallet and transmits a second agreement message related to the second token remittance information to the second electronic wallet.

12. The method of claim 9, wherein the publishing of the first token remittance information on the first blockchain network includes publishing the first token remittance information on the first blockchain network after the first electronic wallet receives a first agreement message related to the first token remittance information from the second electronic wallet, transmits a second agreement message related to the second token remittance information to the second electronic wallet, and transmits a publish notification message to the second electronic wallet,
wherein the publish notification message indicating that the first token remittance information is to be published on the first blockchain network.

13. The method of claim 9, wherein the publishing of the first token remittance information on the first blockchain network includes publishing the first token remittance information on the first blockchain network after the first electronic wallet receives a first agreement message related to the first token remittance information from the second electronic wallet, transmits a second agreement message related to the second token remittance information to the second electronic wallet, transmits a first publish notification message to the second electronic wallet, and receives a second publish notification message from the second electronic wallet,
wherein the first publish notification message indicating that the first token remittance information is to be published on the first blockchain network, and
wherein the second publish notification message indicating that the second token remittance information is to be published on the second blockchain network.

14. The method of claim 9, wherein the publishing of the second token remittance information on the second blockchain network includes publishing the second token remittance information on the second blockchain network after the second electronic wallet receives the first token remittance information from the first electronic wallet and receives a second agreement message related to the second token remittance information from the first electronic wallet.

15. The method of claim 9, wherein the publishing of the second token remittance information on the second blockchain network includes publishing the second token remittance information on the second blockchain network after the second electronic wallet receives a second agreement message related to the second token remittance information from the first electronic wallet and transmits a first agreement message related to the first token remittance information to the first electronic wallet.

16. The method of claim 9, wherein the publishing of the second token remittance information on the second blockchain network includes publishing the second token remittance information on the second blockchain network after the second electronic wallet transmits a first agreement message related to the first token remittance information to the first electronic wallet, receives a second agreement message related to the second token remittance information from the first electronic wallet, and transmits a publish notification message to the first electronic wallet,
wherein the publish notification message indicating that the second token remittance information is to be published on the second blockchain network.

17. The method of claim 9, wherein the publishing of the second token remittance information on the second blockchain network includes publishing the second token remittance information on the second blockchain network after the second electronic wallet transmits a first agreement message related to the first token remittance information to the first electronic wallet, receives a second agreement message related to the second token remittance information from the first electronic wallet, receives a first publish notification message from the first electronic wallet, and transmits a second publish notification message to the first electronic wallet,
wherein the first publish notification message indicating that the first token remittance information is to be published on the first blockchain network, and
wherein the second publish notification message indicating that the second token remittance information is to be published on the second blockchain network.

18. The method of claim 9, wherein the first electronic wallet includes:
a first token remittance electronic wallet transmitting the first token remittance information to the second electronic wallet and publishing the first token remittance information on the first blockchain network; and
a second token receipt electronic wallet receiving the second token remittance information from the second electronic wallet, and
the second electronic wallet includes:
a first token receipt electronic wallet having a same structure as the first token remittance electronic wallet and receiving the first token remittance information from the first electronic wallet; and
a second token remittance electronic wallet having a same structure as the second token receipt electronic wallet, transmitting the second token remittance information to the first electronic wallet, and publishing the second token remittance information on the second blockchain network.

19. A method of providing a token swapping service by using a first electronic wallet installed in a first computing device and a second electronic wallet installed in a second computing device, the method comprising:
transmitting, by the first electronic wallet, first token remittance information for remittance of a first token to the second electronic wallet, the first token being used in a first blockchain network;
transmitting, by the second electronic wallet, second token remittance information for remittance of a second token to the first electronic wallet, the second token being used in a second blockchain network;
after the first electronic wallet transmits the first token remittance information and receives the second token remittance information, publishing, by the first electronic wallet, the received second token remittance information on the second blockchain network; and
after the second electronic wallet receives the first token remittance information and transmits the second token remittance information, publishing, by the second electronic wallet, the received first token remittance information on the first blockchain network.

20. An electronic wallet comprising:
a first token remittance electronic wallet transmitting first token remittance information for remittance of a first token to a counterpart electronic wallet executed on a counterpart computing device, the first token being used in a first blockchain network; and
a second token receipt electronic wallet receiving second token remittance information for remittance of a second token from the counterpart electronic wallet, the second token being used in a second blockchain network,
wherein the first token remittance electronic wallet publishes the first token remittance information on the first blockchain network.

21. The electronic wallet of claim 20, wherein the first token remittance electronic wallet receives a first agreement message related to the first token remittance information from a first token receipt electronic wallet of the counterpart electronic wallet,
the second token receipt electronic wallet receives the second token remittance information from a second token remittance electronic wallet of the counterpart electronic wallet, and
the first token remittance electronic wallet publishes the first token remittance information on the first blockchain network, based on the receipt of the first agreement message and the receipt of the second token remittance information.

22. The electronic wallet of claim 20, wherein the first token remittance electronic wallet receives a first agreement message related to the first token remittance information from a first token receipt electronic wallet of the counterpart electronic wallet,
the second token receipt electronic wallet generates and transmits a second agreement message related to the second token remittance information to a second token remittance electronic wallet of the counterpart electronic wallet, and
the first token remittance electronic wallet publishes the first token remittance information on the first blockchain network, based on the receipt of the first agreement message and the transmission of the second agreement message.

23. The electronic wallet of claim 20, wherein the first token remittance electronic wallet receives a first agreement message related to the first token remittance information from a first token receipt electronic wallet of the counterpart electronic wallet and generates and transmits a publish notification message to the first token receipt electronic wallet, wherein the publish notification message indicating that the first token remittance information is to be published on the first blockchain network,
the second token receipt electronic wallet generates and transmits a second agreement message related to the second token remittance information to a second token remittance electronic wallet of the counterpart electronic wallet, and
the first token remittance electronic wallet publishes the first token remittance information on the first blockchain network, based on the receipt of the first agreement message, the transmission of the second agreement message, and the transmission of the publish notification message.

24. The electronic wallet of claim 20, wherein the first token remittance electronic wallet receives a first agreement message related to the first token remittance information from a first token receipt electronic wallet of the counterpart electronic wallet and generates and transmits a first publish notification message to the first token receipt electronic wallet, wherin the first publish notification message indicating that the first token remittance information is to be published on the first blockchain network,
the second token receipt electronic wallet generates and transmits a second agreement message related to the second token remittance information to a second token remittance electronic wallet of the counterpart electronic wallet and receives a second publish notification message from the second token remittance electronic wallet, wherein the second publish notification message indicating that the second token remittance information is to be published on the second blockchain network, and
the first token remittance electronic wallet publishes the first token remittance information on the first blockchain network, based on the receipt of the first agreement message, the transmission of the second agreement message, the transmission of the first publish notification message, and the receipt of the second publish notification message.
